# FASCICULE DE BREVET EUROPEEN

(11) **EP 1 151 218 B1**
(45) Date de publication et mention de la délivrance du brevet: **29.06.2005**
(21) Numéro de dépôt: 00900550.5
(22) Date de dépôt: 07.01.2000
(51) Int. Cl.: F16K 31/08

(54) **VANNE MULTIDEBITS ASEPTISABLE A BOBINAGES COAXIAUX ET MACHINE DE REMPLISSAGE COMPORTANT UNE TELLE VANNE**
ASEPTISCHES DURCHFLUSSREGULIERVENTIL MIT EINER KOAXIALEN WICKLUNG FÜR MEHRERE DURCHFLUSSRATEN UND FÜLLVORRICHTUNG MIT EINEM SOLCHEN VENTIL
COAXIAL REEL ASEPTICIZABLE MULTIFLOW VALVE AND FILLING MACHINE CONTAINING SAID VALVE

(30) Priorité: 21.01.1999 FR 9900744
(43) Date de publication de la demande: 07.11.2001
(73) Titulaire: SIDEL, 76053 Le Havre Cedex (FR)
(72) Inventeur: FEUILLOLEY, Guy, F-76053 Le Havre Cedex (FR); DE BENNETOT, Christian, F-76053 Le Havre Cedex (FR)
(74) Mandataire: Siloret, Patrick
(86) Numéro de dépôt international: PCT/FR2000/000038
(87) Numéro de publication internationale: WO 2000/043702

(56) Documents cités:
- EP-A- 0 168 306
- DE-A- 3 730 381
- FR-A- 2 206 726
- GB-A- 928 997
- US-A- 5 529 281

## Description

L'invention concerne une vanne aseptisable pour la commande du débit d'un fluide dans un circuit, du type dans lequel la vanne comporte un pointeau qui est mobile axialement dans une chambre de commande entre une position extrême reculée d'ouverture et une position extrême avancée de fermeture, du type dans lequel une extrémité avant de la chambre forme un siège contre lequel le pointeau vient en appui lorsqu'il est en position de fermeture, et du type dans lequel la position axiale du pointeau est déterminée par un champ magnétique créé par des moyens de génération de champ magnétique agencés à l'extérieur de la chambre.

Une telle vanne est notamment destinée à être utilisée dans une machine de remplissage car elle permet un nettoyage parfait du circuit de distribution de fluide, ce qui permet d'éviter toute contamination du fluide au cours du remplissage. Bien entendu, une telle vanne se révèle particulièrement avantageuse dans le cas du remplissage de produits alimentaires.

En effet, selon une caractéristique essentielle de ce type de vannes dont on trouve des exemples dans les documents FR-A-2.206.726 et DE-A-1.600.717, le pointeau est entièrement compris dans la chambre de commande sans être relié par quelque organe que ce soit à l'extérieur du circuit. Ainsi, on garantit un parfait isolement entre l'intérieur du circuit et l'extérieur.

Tel n'est pas le cas des vannes dans lesquelles le pointeau est déplacé par un actionneur électromagnétique par l'intermédiaire d'une tige de commande. En effet, la tige de commande présente alors une extrémité reliée au pointeau qui est à l'intérieur du circuit, et une extrémité reliée à l'actionneur qui est à l'extérieur. Immanquablement, il faut donc prévoir des moyens d'étanchéité autour de la tige, ces moyens ne devant pas empêcher les mouvements de la tige qui commande les déplacements du pointeau. Or, ces moyens d'étanchéité sont soumis à l'usure et peuvent devenir un point d'entrée pour des contaminants.

Les vannes dont la position du pointeau est commandée par un champ magnétique sont donc particulièrement intéressantes en termes de propreté du circuit de distribution de liquide. Cependant, la plupart de ces vannes sont des vannes de type " tout ou rien ". En effet, le champ magnétique est créé par un électro-aimant de sorte que le pointeau ne peut occuper que deux positions suivant que l'électro-aimant est alimenté électriquement ou non.

Or, pour les machines de remplissage, il apparaît qu'il est intéressant de pouvoir disposer de plusieurs débits de fluide, notamment pour pouvoir accélérer le remplissage en dépit du phénomène de création de mousse. En effet, lorsque le débit de remplissage est important, ce qui permet de remplir rapidement un volume donné de produit, on observe immanquablement l'apparition de mousse. Cela se révèle particulièrement gênant en fin de remplissage car la mousse conduit a un débordement du produit, ce qui entraîne non seulement une perte de produit mais surtout une incertitude quant à la quantité de produit qui est effectivement contenue dans le récipient en fin de remplissage. Bien entendu, la formation de mousse est beaucoup moins importante si l'on réduit le débit de remplissage, mais on augmente alors la durée de celui-ci.

Ainsi, il est apparu particulièrement intéressant de remplir le récipient en deux phases. Dans une première phase, on privilégie la rapidité de remplissage en utilisant un gros débit de fluide, sans se soucier du problème de moussage du produit. Dans une seconde phase, on utilise un débit moindre pour permettre à la mousse éventuellement créée au cours de la première phase de se résorber et pour arriver au niveau souhaité de remplissage, soit en termes de poids de produit, soit en termes de volume ou de hauteur de remplissage, avec le plus de précision possible.

Or un tel procédé de remplissage nécessite l'utilisation d'une vanne capable de déterminer au moins deux débits différents.

L'invention a donc pour objet de proposer une nouvelle conception d'une vanne aseptisable qui permette de déterminer au moins deux débits discrets différents, tout en étant de construction simple et en étant facile à mettre en oeuvre.

Dans ce but, l'invention propose une vanne du type décrit plus haut, caractérisée en ce que le pointeau comporte un noyau en matériau magnétique, en ce que la vanne comporte un aimant permanent avant créant un champ magnétique avant propre à agir sur le noyau de manière à assurer le maintien du pointeau en position de fermeture en appui sur le siège, et un aimant permanent arrière créant un champ magnétique arrière propre à agir sur le noyau de manière à assurer le maintien du pointeau en position extrême reculée d'ouverture correspondant à un premier débit au travers de la vanne, en ce que la vanne comporte au moins une bobine avant et une bobine arrière qui sont agencées coaxialement autour de la chambre et qui sont décalées axialement l'une par rapport à l'autre, en ce que la bobine avant est agencée en arrière de l'aimant avant, en ce que l'une des bobines est prévue pour pouvoir maintenir le pointeau dans une position intermédiaire avancée correspondant à un second débit, et en ce que l'alimentation électrique des bobines peut être commandée pour provoquer le déplacement du pointeau entre les positions extrêmes et la position intermédiaire.

Selon d'autres caractéristiques de l'invention :
- la bobine arrière est alimentée électriquement dans un premier sens pour appeler le pointeau de sa position de fermeture vers sa position reculée d'ouverture ;
- la bobine arrière est alimentée électriquement dans un second sens pour appeler le pointeau de sa position reculée d'ouverture vers sa position intermédiaire avancée et pour le maintenir dans cette position intermédiaire avancée ;
- ta bobine avant est alimentée électriquement pour amener le pointeau de sa position intermédiaire avancée vers sa position de fermeture dans laquelle il est maintenu par l'aimant avant ;
- la vanne est orientée de telle sorte que le pointeau se déplace verticalement vers le haut vers sa position de fermeture.

En variante :
- la bobine avant est alimentée électriquement pour appeler et maintenir le pointeau en position intermédiaire avancée, et la bobine arrière est alimentée pour appeler le pointeau en position reculée ;
- la vanne comporte une bobine intermédiaire qui est agencée entre les bobines avant et arrière et qui est alimentée pour appeler et maintenir le pointeau dans sa position avancée et pour appeler le pointeau en position reculée ;
- la bobine arrière et l'aimant arrière sont agencés axialement au même niveau, de manière concentrique ;
- la bobine arrière est agencée radialement à l'intérieur de l'aimant arrière ;
- la vanne est orientée de telle sorte que le pointeau se déplace verticalement vers le bas vers sa position de fermeture ;
- la longueur axiale du noyau est sensiblement égale à celle des ensembles formés d'une part par la bobine avant et la bobine intermédiaire et d'autre part par la bobine intermédiaire et la bobine arrière.

Dans les deux cas,
- le pointeau comporte un corps principal en matériau amagnétique qui porte le noyau magnétique ;
- le fluide circule d'arrière en avant dans la vanne ; et
- l'un au moins des deux aimants présente une aimantation radiale.

L'invention concerne aussi une machine de remplissage de récipients, caractérisée en ce qu'elle comporte une vanne incorporant l'une quelconque des caractéristiques précédentes.

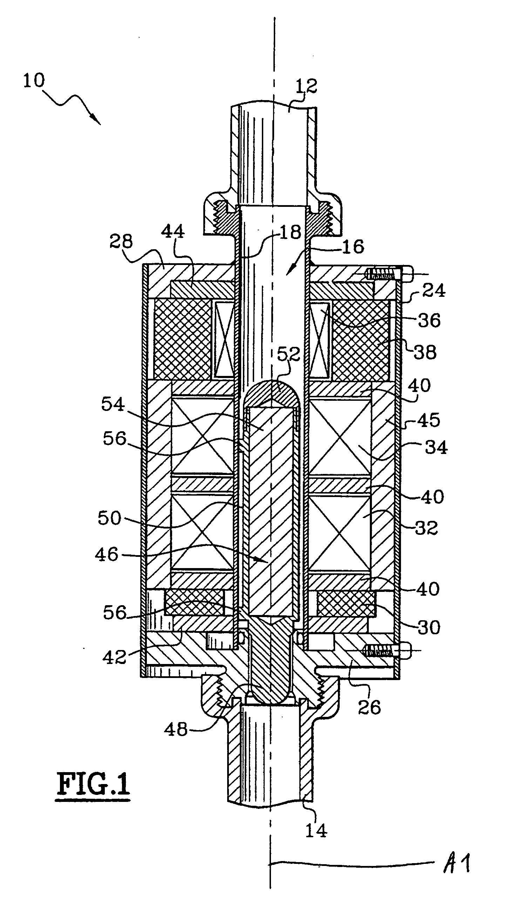

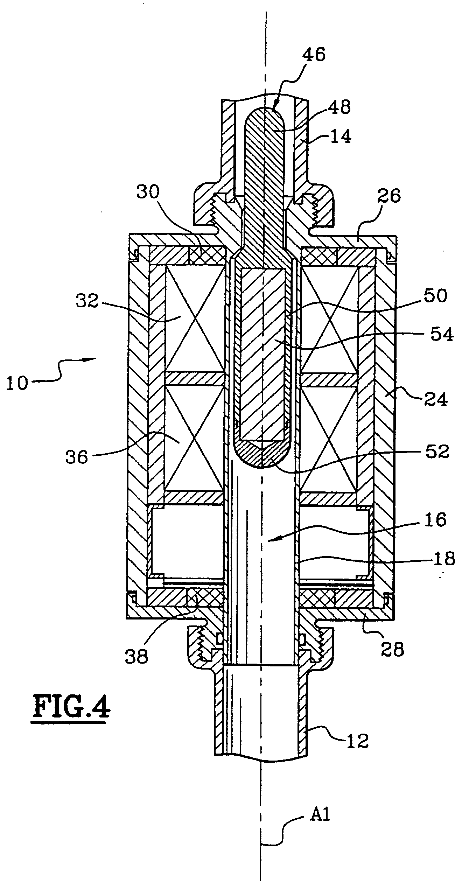

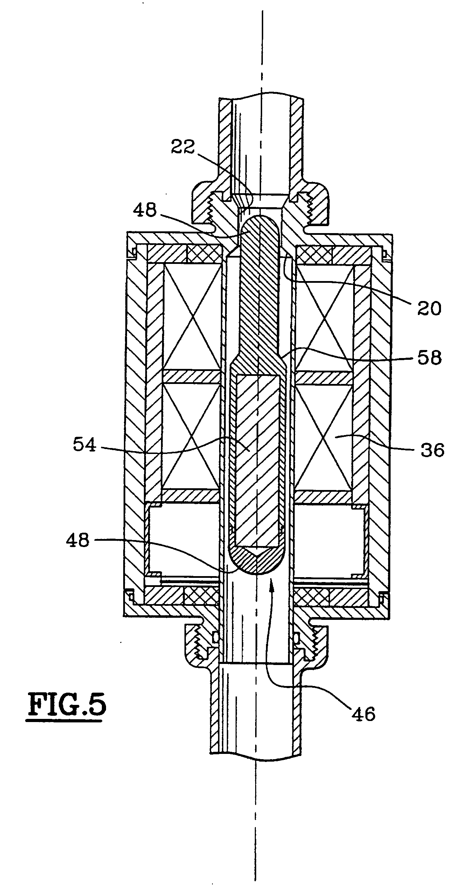

D'autres caractéristiques et avantages de l'invention apparaîtront à la lecture de la description détaillée qui suit ainsi que dans les dessins annexés dans lesquels les figures 1 à 3 sont des vues schématiques en coupe axiale d'une vanne conforme aux enseignements de l'invention, la vanne étant illustrée respectivement en position de fermeture, en position de petit débit et en position de grand débit. Les figures 4 à 6 sont des vues similaires à celles des figures 1 à 3 qui illustrent un second mode de réalisation de l'invention.

La vanne 10 qui est illustrée sur les figures 1 à 3 est destinée à être interposée entre un tronçon amont 12 et un tronçon aval 14 d'une conduite d'un circuit d'alimentation.

La vanne 10 peut par exemple être utilisée dans une machine de remplissage de récipients, auquel cas le circuit d'alimentation relie une cuve de stockage de produit à un bec de remplissage. Dans une telle machine, un récipient est amené en regard du bec et la vanne 10 est ouverte pour permettre le passage du produit. Lorsque le récipient est rempli, la vanne 10 est refermée.

La vanne 10 a une structure générale tubulaire. En son centre, elle comporte une chambre de commande cylindrique 16 qui est délimitée par un tube central 18 d'axe A1. Les extrémités supérieures et inférieures de la chambre 16 sont reliées respectivement aux tronçons amont 12 et aval 14 du circuit d'alimentation.

Dans la description qui suit, les termes inférieur, supérieur, haut, bas, etc... sont utilisés en référence aux figures 1 à 3 pour une plus grande facilité de compréhension. Ils ne doivent pas être compris comme étant des limitations de la portée de l'invention, notamment quant à l'orientation de la vanne. En effet, l'orientation verticale de l'axe A1 de la vanne n'est qu'un mode préféré de réalisation. Ainsi, dans la description des figures 1 à 3, les notions de haut et bas seront respectivement confondues avec celles d'arrière et d'avant utilisées dans les revendications.

L'extrémité inférieure, aussi appelée extrémité avant, de la chambre 16 présente la forme d'un seuil formé par une restriction de section. Le seuil présente ainsi une position tronconique 20 qui est destinée à former un siège et qui est prolongée vers le bas par une portion cylindrique 22 de diamètre inférieur au diamètre de la chambre 18. Le seuil est donc situé à l'extrémité aval de la vanne. Toutefois, en variante, on pourrait pour certaines applications prévoir de réaliser une vanne dans laquelle le seuil serait agencé à l'extrémité amont de la chambre de commande.

La vanne 10 comporte une chemise externe tubulaire 24 d'axe A1 qui est agencée coaxialement autour du tube 18. Le diamètre extérieur du tube 18 est par exemple de 26 mm tandis que le diamètre interne de la chemise 24 est par exemple d'environ 85 mm, de sorte qu'il existe entre le tube 18 et la chemise 24 un espace tubulaire.

Dans l'exemple illustré, le seuil est formé dans une plaque transversale avant 26 qui ferme la vanne vers le bas tandis qu'un couvercle 28 la referme vers l'arrière.

A l'intérieur de l'espace délimité entre le tube 18 et la chemise 24, on a superposé différents moyens de génération de champs magnétiques, à savoir dans l'ordre, du haut vers le bas, un aimant permanent inférieur (ou avant) 30, une bobine inférieure (ou avant) 32, une bobine intermédiaire 34, une bobine supérieure (ou arrière) 36 et un aimant permanent supérieur (ou arrière) 38. Chacun de ces générateurs de champ magnétique est de forme annulaire d'axe A1 et ils sont décalés l'un de l'autre selon l'axe A1, à l'exception de la bobine supérieure 36 et de l'aimant supérieur 38 qui sont concentriques, la bobine 36 étant agencée radialement à l'intérieur de l'aimant 38.

Deux générateurs consécutifs sont séparés axialement par une rondelle intercalaire 40 et il est par ailleurs prévu une rondelle inférieure 42 entre l'aimant inférieur 30 et la plaque inférieure 26 et une rondelle supérieure 44 entre l'aimant supérieur 38 et le couvercle 28. La bobine inférieure 32 et la bobine intermédiaire sont entourées par une douille tubulaire 45 reçue à l'intérieur de la chemise 24. Les rondelles 40, 42, 44 et la douille 45 ont pour fonction de diriger les lignes de champ magnétiques créées par les générateurs de champ.

Les trois bobines 32, 34, 36 sont formées chacune d'un enroulement de fil conducteur, le diamètre interne de l'enroulement étant très peu supérieur au diamètre externe du tube 18. Lorsqu'une des bobines est alimentée en courant continu, elle induit à l'intérieur de la chambre de commande 16 un champ magnétique sensiblement dirigé selon l'axe A1. Les trois bobines sont toujours alimentées de telle sorte que les champs magnétiques qu'elles créent soient tous non seulement parallèles mais aussi orientés dans le même sens, et qu'ils soient aussi de même sens que le champ magnétique créé par l'aimant permanent supérieur 38.

On notera que la bobine supérieure 36 et l'aimant supérieur 38, étant concentriques, les champs magnétiques qu'ils induisent respectivement dans la chambre de commande se superposent en s'additionnant.

Pour réguler le débit qui la traverse, la vanne 10 comporte un pointeau mobile 46 qui se déplace axialement dans la chambre de commande 16.

Le pointeau 46 comporte un enveloppe extérieure qui présente une tête 48 prolongée axialement vers le haut par un fût tubulaire 50. L'extrémité supérieure du fût 50 est destinée à recevoir un capuchon 52 qui permet ainsi de délimiter, à l'intérieur du pointeau 46, un logement dans lequel est reçu un noyau cylindrique 54. L'enveloppe extérieure du pointeau, formée de la tête 48, du fût 50 et du capuchon 52 sont réalisés en matériau amagnétique, plus particulièrement en un acier inoxydable amagnétique. Toutefois, on peut aussi prévoir de réaliser l'enveloppe extérieure du pointeau en matériau polymère. Au contraire, le noyau 54 est réalisé en un matériau magnétique tel que le fer doux, le fer pur ou un alliage fer-cobalt.

Comme on peut le voir sur les figures 1 à 3, la longueur axiale du noyau 54 est sensiblement égale à celle des ensembles formés d'une part par la bobine inférieure 32 et la bobine intermédiaire 34 et d'autre part par la bobine intermédiaire 34 et la bobine supérieure 36.

Alternativement, le pointeau pourrait être entièrement en matériau magnétique. Dans ce cas, la longueur axiale des deux ensembles précités serait sensiblement égale à celle du pointeau.

De même, on peut voir que le diamètre externe du fût 50 est inférieur au diamètre de la chambre de commande de manière que le produit qui circule dans la vanne puisse s'écouler sans trop de perte de charge. Toutefois, le fût 48 comporte deux séries de plots 56 qui s'étendent radialement vers l'extérieur pour venir au contact de la surface interne du tube 18. Les plots 56 d'une même série sont disposés selon un cercle, à intervalles réguliers autour de l'axe A1, et les deux cercles sont décalés axialement de telle sorte que les plots assurent un guidage du pointeau 46 dans la chambre 16. Dans le second exemple de réalisation de l'invention qui est illustré sur les figures 4 à 6, le guidage du pointeau 46 est assuré par des rails en hélice formés en relief sur le fût 48.

Enfin, on peut voir que la tête 48 du pointeau 46 présente un secteur tronconique 58 qui est destiné à coopérer avec le siège 20 du seuil de la vanne et qui est prolongé vers le bas par un secteur cylindrique 60 dont le diamètre est inférieur au diamètre du tronçon cylindrique 22 du seuil. Bien entendu le siège 20 et le secteur 58 du pointeau qui prend appui dessus pourront prendre d'autres formes géométriques adaptées à réaliser l'étanchéité en position fermée. Ainsi, le secteur 58 peut être remplacé par un secteur sphérique ou par un surface annulaire plane. De même, on pourrait prévoir de réaliser ce secteur d'appui du pointeau sous la forme d'une pièce rapportée ou surmoulée en matériau polymère souple pour faciliter l'obtention d'une parfaite étanchéité de la vanne.

On va maintenant décrire le fonctionnement de la vanne selon le premier mode de réalisation de l'invention en partant de la position de fermeture du pointeau qui est illustrée à la figure 1.

On voit alors que le secteur tronconique 58 du pointeau est en appui vers le bas contre le siège 20 du seuil de manière à interdire tout passage du produit au travers de la vanne 10. Aucune des bobines 32, 34, 36 n'est alors alimentée de sorte que les seuls champs magnétiques existants sont ceux créés par les aimants permanents 30, 38.

On peut voir que dans cette position du pointeau 46, l'extrémité inférieure du noyau magnétique 54 se trouve juste en regard de l'aimant inférieur 30 alors que l'extrémité supérieure du noyau se trouve bien en dessous du niveau de l'aimant supérieur 38.

Ainsi, vis-à-vis de l'aimant inférieur 30, le noyau magnétique 54 est positionné de telle sorte que la réluctance du circuit magnétique soit minimale. Au contraire, l'aimant supérieur est sans influence sur le noyau 54. De la sorte les aimants permanents créent sur le noyau une force dont la composante verticale est tournée vers le bas et s'oppose à tout soulèvement intempestif du pointeau. En effet, dès que l'on déplace le noyau 54 vers le haut, l'extrémité inférieure tend à sortir du trajet idéal pour les lignes du champ magnétique de l'aimant inférieur, ce qui tend donc à augmenter la réluctance du circuit magnétique. Or, selon le principe physique de la moindre réluctance, le champ magnétique créé par l'aimant inférieur exerce donc sur le noyau une force dirigée vers le bas.

Ainsi, le maintien du pointeau en position de fermeture se fait sans dépense d'énergie puisque aucune bobine n'est alimentée.

Avantageusement, dans le cadre de la disposition de la vanne 10 qui est illustrée sur les figures, le poids du pointeau 56 et la pression du produit sur celui-ci tendent à forcer eux aussi le pointeau 56 en appui sur le siège 20.

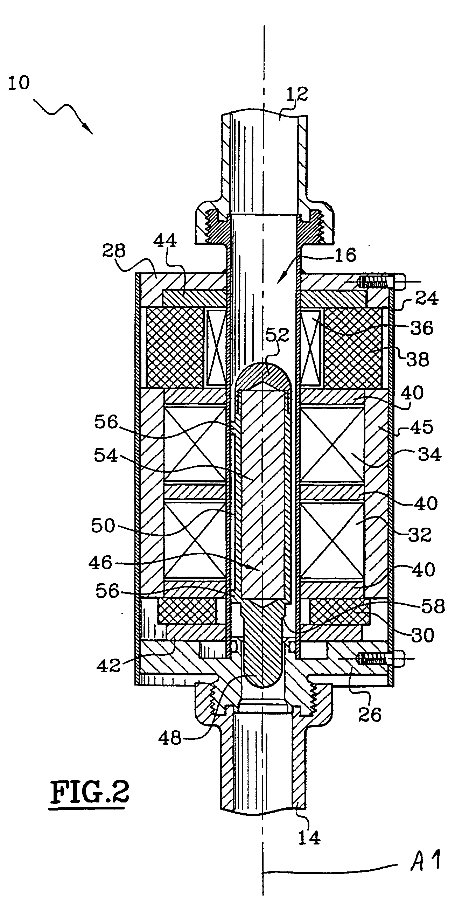

Pour amener le pointeau jusqu'à la position de petit débit qui est illustrée sur la figure 2, on alimente en courant continu les bobines inférieure 32 et intermédiaire 34. La résultante des champs magnétiques créés par ces deux bobines est très supérieure à la valeur du champ magnétique induit par l'aimant inférieur 30. Toutefois, lorsque le pointeau est en position de fermeture tel qu'illustré à la figure 1, le noyau 54 ne se trouve pas exactement en regard de l'ensemble formé par les bobines inférieure et intermédiaire. Au contraire, le noyau se trouve décalé vers le bas de sorte que, pour le champ magnétique résultant créé par les deux bobines, la réluctance du circuit magnétique n'est pas minimale. Aussi, ce champ magnétique résultant exerce sur le noyau une force qui tend à le soulever, cette force étant supérieure à la somme des forces qui l'attirent vers le bas et notamment supérieure à celle exercée par l'aimant inférieur 30.

Aussi, dès que les bobines inférieures et intermédiaires sont alimentées, le pointeau 46 se déplace alors vers le haut jusqu'à ce que le noyau 54 soit exactement en regard de l'ensemble formé par les bobines inférieure 32 et intermédiaire 34. Dans cette position intermédiaire, on remarque que l'extrémité inférieure du noyau 54 ne se trouve plus en regard de l'aimant inférieur 30 lequel n'exerce alors plus d'action sur le noyau 54.

Par ailleurs, dans cette position du pointeau 46, on peut voir bien évidemment que le secteur tronconique 58 s'est soulevé du siège 20 afin d'autoriser le passage du fluide au travers du seuil. Cependant, dans cette position, le secteur cylindrique 60 de la tête 48 du pointeau 46 demeure reçu à l'intérieur du tronçon cylindrique 22 du seuil. Ainsi, la section de passage au travers de la vanne se trouve limitée à l'espace tubulaire compris radialement entre les deux, ce qui limite le débit à une valeur calibrée par la différence de diamètre entre le tronçon 22 et le secteur 60. La position axiale du pointeau 46 n'a pas alors besoin d'être déterminée avec une très grande précision tant que le secteur tronconique 58 reste décollé du siège 20 et que le secteur cylindrique 60 demeure à l'intérieur du tronçon 22 du seuil.

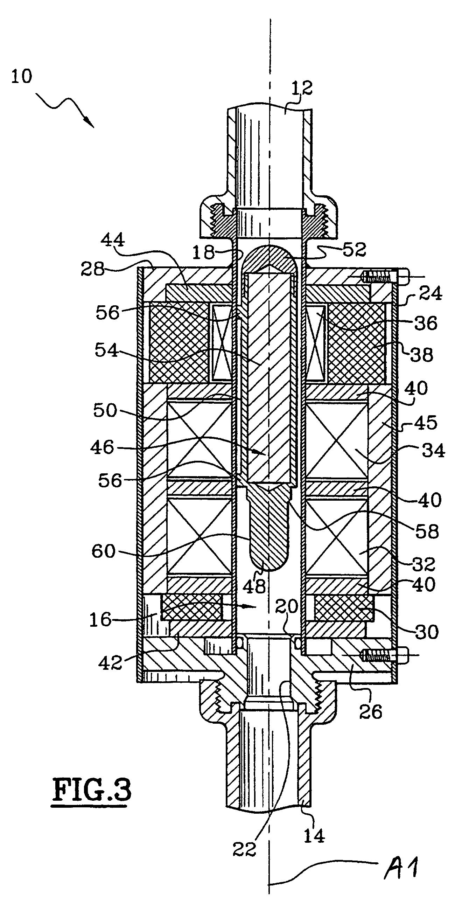

Tant que les deux bobines inférieure 32 et intermédiaire 34 restent alimentées, le pointeau se maintient dans la position dite de petit débit illustrée à la figure 3.

Pour passer à la position de pleine ouverture du pointeau 46 qui est illustrée à la figure 3, il suffit, en partant de la position de petit débit, d'alimenter la bobine supérieure 36 et de cesser d'alimenter la bobine inférieure 32. Pour les mêmes raisons qu'exposé plus haut, le noyau 54 se positionne alors de manière à obtenir une réluctance minimale du circuit magnétique parcouru par les lignes du champ magnétique, ce dernier étant alors la résultante des champs induits par les bobines intermédiaire 34 et supérieure 36 et par l'aimant permanent supérieur 38. Le noyau 54 vient alors juste en regard de l'ensemble formé par ces trois générateurs de champ magnétique.

Pour cette position du noyau 54, on voit à la figure 3 que la tête 48 du pointeau 46 est entièrement dégagée du seuil de manière à libérer complètement le passage du produit au travers de la vanne, ce qui permet un débit de produit maximal.

Avantageusement, il est alors possible de couper l'alimentation électrique des bobines, l'aimant supérieur 38 suffisant à maintenir le pointeau 46 en position de pleine ouverture.

Pour repasser en position de petit débit depuis la position de gros débit, on alimente de nouveau les bobines inférieure 32 et intermédiaire 34 qui créent un champ magnétique suffisant pour "décrocher" le pointeau de sa position de pleine ouverture. Eventuellement, pour ralentir le mouvement du pointeau 46 lorsqu'il arrive en position de petit débit, on peut alimenter de nouveau de manière fugace la bobine supérieure 36. De même, lorsque le pointeau 46 s'est stabilisé en position de petit débit, on peut prévoir de diminuer l'intensité du courant qui parcourt les bobines inférieure 32 et intermédiaire 34 à une valeur juste suffisante pour maintenir le pointeau 46, sachant que la position exacte du pointeau n'est pas déterminante ainsi que cela a été vu plus haut.

Pour ramener le pointeau en position de fermeture à partir de la position de petit débit, il suffit d'interrompre toute alimentation des bobines. L'effet conjugué de l'aimant inférieur 30, de la pesanteur et de la pression du fluide qui s'écoule au travers de la vanne permet de ramener le pointeau en appui sur le siège 20.

La vanne selon l'invention présente ainsi, dans ce premier mode de réalisation, de nombreux avantages. Ainsi, elle comporte un nombre réduit de pièces et ne comporte pas d'autre pièce mobile que le pointeau qui reste d'une conception très simple. De même, la commande d'alimentation des bobines peut être réalisée à l'aide d'un circuit électronique très simple que l'homme du métier mettra en oeuvre sans problème.

Enfin, le maintien du pointeau en position de pleine ouverture et en position de fermeture se fait sans dépense d'énergie grâce à la présence des aimants permanents 30, 38.

La vanne 10 selon l'invention est particulièrement adaptée pour être utilisée dans une machine de remplissage de liquides alimentaires, notamment dans les machines à carrousel comportant un nombre important de becs de remplissage. En effet, sa conception simple et fiable permet de l'intégrer à une telle machine sans altérer le niveau de fiabilité de celle-ci. Bien entendu, sa parfaite adaptation à un nettoyage fréquent et rigoureux est aussi un atout important.

Enfin, grâce à sa capacité de fonctionner sous deux débits discrets différents, on pourra prévoir un remplissage en deux phases, une première phase sous débit important et une seconde phase sous un débit réduit pour limiter l'apparition de mousse et pour augmenter la précision de dosage, notamment lorsque le remplissage se fait par mesure de débit ou par mesure du poids du récipient que l'on remplit.

La structure de vanne qui vient d'être décrite correspond à un mode de réalisation préféré de l'invention. Toutefois, ceci n'est pas limitatif de la portée de l'invention et l'homme du métier pourra aisément déduire des structures de vanne équivalentes.

Notamment, dans une variante simplifiée, on peut éventuellement envisager que les deux bobines inférieure et intermédiaire soient réunies en une seule bobine qui est alimentée uniquement lors de l'appel et du maintien du pointeau en position de petit débit.

Au contraire, on peut sans difficulté prévoir de réaliser une vanne permettant de déterminer plus de deux débits discrets. Pour cela, il suffit de prévoir autant de bobines intermédiaires supplémentaires que de débits discrets supplémentaires souhaités. Bien entendu, la tête du pointeau, ou le secteur cylindrique 22 du seuil, devront aussi être modifiés de manière à présenter plusieurs secteurs cylindriques étagés selon des diamètres différents pour définir différentes sections de passage pour le fluide au travers du seuil en fonction de la position du pointeau. Les différentes positions intermédiaires du pointeau seront toutes obtenues en alimentant deux bobines intermédiaires successives.

Sur les figures 4 à 6, dans lesquelles on a illustré un second mode de réalisation de l'invention, des éléments identiques ou similaires à ceux décrits en relation avec le premier mode de réalisation sont désignés par les mêmes chiffre de référence.

Ce mode de réalisation est optimisé pour fonctionner "seuil en haut".

Dans ce mode de réalisation, on retrouve l'architecture générale de la vanne selon l'invention, c'est-à-dire les deux aimants avant 30 et arrière 32 et les deux bobines avant 32 et arrière 36. Contrairement au premier mode de réalisation, celui-ci ne comporte pas de bobine intermédiaire de sorte que la bobine arrière n'est plus agencée au centre de l'aimant arrière 38 mais en avant de celui-ci. Comme on peut le voir sur les figure, les bobines avant 32 et arrière 36 sont donc juxtaposées et, entre la bobine arrière 36 et l'aimant arrière 38, on a ménagé un espace qui permet par exemple de loger les composants électroniques de gestion de l'alimentation électrique des bobines.

Dans ce second mode de réalisation, on a choisi d'utiliser des aimants avant 30 et arrière 38 qui présentent une aimantation radiale et non axiale. Conformément à l'invention, ils ont pour fonction de maintenir le pointeau 46 respectivement en position avancée de fermeture et en position reculée de pleine ouverture correspondant au plus gros débit.

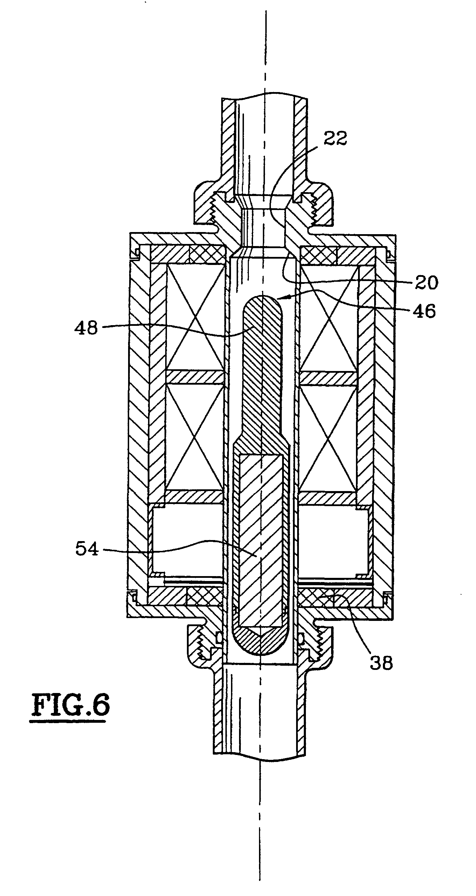

Pour commander l'ouverture de la vanne 10 vers sa position de grand débit, il suffit d'alimenter la bobine arrière 36 selon un premier sens, ce qui provoque le soulèvement du pointeau 46 qui se déplace vers le bas. Sous l'effet de son poids et de l'inertie, le pointeau 46 dépasse la bobine arrière 36 et vient se positionner tel que représenté à la figure 6. En coupant l'alimentation électrique de la bobine arrière 36, le pointeau 46 se retrouve alors sous la seule action de l'aimant arrière 38 qui le maintien alors dans cette position.

Pour ramener le pointeau vers l'avant jusqu'à sa position intermédiaire correspondant au petit débit, il suffit d'alimenter la bobine arrière 32 en veillant toutefois à inverser le sens d'alimentation par rapport à ce qui est nécessaire à l'ouverture de la vanne 10. Bien entendu, la bobine arrière reste alimentée tant que l'on veut maintenir le pointeau dans sa position intermédiaire.

Pour provoquer la fermeture de la vanne 10, il suffit d'alimenter brièvement la bobine avant 32 qui force alors le pointeau en appui sur son siège. Une fois en position de fermeture, plus aucune bobine n'est alimentée car le pointeau 46 est maintenu dans cette position par l'aimant avant 30.

## Revendications

1. Vanne aseptisable pour la commande du débit d'un fluide dans un circuit, du type dans lequel la vanne comporte un pointeau (46) qui est mobile axialement dans une chambre de commande (16) entre une position extrême reculée d'ouverture et une position extrême avancée de fermeture, du type dans lequel une extrémité avant de la chambre forme un siège (20) contre lequel le pointeau (46, 58) vient en appui lorsqu'il est en position de fermeture, et du type dans lequel la position axiale du pointeau (46) est déterminée par un champ magnétique créé par des moyens de génération de champ magnétique agencés à l'extérieur de la chambre (16),
**caractérisée en ce que** le pointeau (46) comporte un noyau (54) en matériau magnétique, **en ce que** la vanne comporte un aimant permanent avant (30) créant un champ magnétique avant propre à agir sur le noyau (54) de manière à assurer le maintien du pointeau (46) en position de fermeture en appui sur le siège (20), et un aimant permanent arrière (38) créant un champ magnétique arrière propre à agir sur le noyau (54) de manière à assurer le maintien du pointeau en position extrême reculée d'ouverture correspondant à un premier débit au travers de la vanne, **en ce que** la vanne comporte au moins une bobine avant (32) et une bobine arrière (36) qui sont agencées coaxialement autour de la chambre (16) et qui sont décalées axialement l'une par rapport à l'autre, **en ce que** la bobine avant (32) est agencée en arrière de l'aimant avant (30), **en ce que** l'une des bobines est prévue pour pouvoir maintenir le pointeau (46) dans une position intermédiaire avancée correspondant à un second débit, et **en ce que** l'alimentation électrique des bobines peut être commandée pour provoquer le déplacement du pointeau entre les postions extrêmes et la position intermédiaire.

2. Vanne selon la revendication 1, **caractérisée en ce que** la bobine arrière (36) est alimentée électriquement dans un premier sens pour appeler le pointeau (46) de sa position de fermeture vers sa position reculée d'ouverture.

3. Vanne selon la revendication 2, **caractérisée en ce que** la bobine arrière (36) est alimentée électriquement dans un second sens pour appeler le pointeau (46) de sa position reculée d'ouverture vers sa position intermédiaire avancée et pour le maintenir dans cette position intermédiaire avancée.

4. Vanne selon la revendication 3, **caractérisée en ce que** la bobine avant (32) est alimentée électriquement pour amener le pointeau (46) de sa position intermédiaire avancée vers sa position de fermeture dans laquelle il est maintenu par l'aimant avant (30).

5. Vanne selon l'une quelconque des revendications précédentes, **caractérisée en ce que** la vanne (10) est orientée de telle sorte que le pointeau (46) se déplace verticalement vers le haut vers sa position de fermeture.

6. Vanne selon la revendication 1, **caractérisée en ce que** la bobine avant (32) est alimentée électriquement pour appeler et maintenir le pointeau (46) en position intermédiaire avancée, et **en ce que** la bobine arrière (36) est alimentée pour appeler le pointeau (46) en position reculée.

7. Vanne selon la revendication 6, **caractérisée en ce qu'**elle comporte une bobine intermédiaire (34) qui est agencée entre les bobines avant (32) et arrière (36) et qui est alimentée pour appeler et maintenir le pointeau (46) dans sa position intermédiaire avancée et pour appeler le pointeau (46) en position reculée.

8. Vanne selon l'une des revendications 6 ou 7, **caractérisée en ce que** la bobine arrière (36) et l'aimant arrière (38) sont agencés axialement au même niveau, de manière concentrique.

9. Vanne selon la revendication 8, **caractérisée en ce que** la bobine arrière (36) est agencée radialement à l'intérieur de l'aimant arrière (38).

10. Vanne selon l'une quelconque des revendications 7 à 9, **caractérisée en ce que** la longueur axiale du noyau (54) est sensiblement égale à celle des ensembles formés d'une part par la bobine avant (32) et la bobine intermédiaire (34) et d'autre part par la bobine intermédiaire (34) et la bobine arrière (36).

11. Vanne selon l'une quelconque des revendications 6 à 10, **caractérisée en ce que** la vanne (10) est orientée de telle sorte que le pointeau (46) se déplace verticalement vers le bas vers sa position de fermeture.

12. Vanne selon l'une quelconque des revendications précédentes, **caractérisée en ce que** le pointeau (46) comporte un corps principal (48, 50, 52) en matériau amagnétique qui porte le noyau magnétique (54).

13. Vanne selon l'une quelconque des revendications précédentes, **caractérisée en ce que** le fluide circule d'arrière en avant dans la vanne.

14. Vanne selon l'une quelconque des revendications précédentes, **caractérisée en ce que** l'un au moins des deux aimants (30, 38) présente une aimantation radiale.

15. Machine de remplissage de récipients, **caractérisée en ce qu'**elle comporte au moins une vanne conforme à l'une quelconque des revendications précédentes.

## Patentansprüche

1. Entkeimbares Ventil zur Regelung des Durchflusses eines Fluids in einem Kreislauf jener Art, bei der das Ventil eine Nadel (46) aufweist, die in einer Steuerkammer (16) zwischen einer zurückgezogenen Öffnungsendstellung und einer vorgerückten Schließendstellung axial beweglich ist, jener Art, bei der ein vorderes Ende der Kammer einen Sitz (20) bildet, an den die Nadel (46, 58) zur Anlage kommt, wenn sie sich in Schließstellung befindet, und jener Art, bei der die axiale Stellung der Nadel (46) durch ein magnetisches Feld bestimmt wird, das durch außerhalb der Kammer (16) angeordnete Magnetfelderzeugungsmittel erzeugt wird,
**dadurch gekennzeichnet, dass** die Nadel (46) einen Kern (54) aus magnetischem Material aufweist, dass das Ventil einen vorderen Dauermagneten (30), der ein vorderes Magnetfeld erzeugt, das auf den Kern (54) einwirken kann, um das Halten der Nadel (46) in Schließstellung in Anlage an den Sitz (20) zu gewährleisten, und einen hinteren Dauermagneten (38) aufweist, der ein hinteres Magnetfeld erzeugt, das auf den Kern (54) einwirken kann, um das Halten der Nadel in der zurückgezogenen Öffnungsendstellung, die einem ersten Durchfluss durch das Ventil entspricht, zu gewährleisten, dass das Ventil mindestens eine vordere Spule (32) und eine hintere Spule (36) aufweist, die koaxial um die Kammer (16) herum angeordnet und axial voneinander versetzt sind, dass die vordere Spule (32) hinter dem vorderen Magneten (30) angeordnet ist, dass eine der Spulen zum Halten der Nadel (46) in einer vorgerückten Zwischenstellung, die einem zweiten Durchfluss entspricht, vorgesehen ist, und dass die elektrische Speisung der Spulen dahingehend gesteuert werden kann, das Verschieben der Nadel zwischen den Endstellungen und der Zwischenstellung zu bewirken.

2. Ventil nach Anspruch 1, **dadurch gekennzeichnet, dass** die hintere Spule (36) in einer ersten Richtung elektrisch gespeist wird, um die Nadel (46) aus ihrer Schließstellung in ihre zurückgezogene Öffnungsstellung zu bringen.

3. Ventil nach Anspruch 2, **dadurch gekennzeichnet, dass** die hintere Spule (36) in einer zweiten Richtung elektrisch gespeist wird, um die Nadel (46) aus ihrer zurückgezogenen Öffnungsstellung in ihre vorgerückte Zwischenstellung zu bringen und sie in dieser vorgerückten Zwischenstellung zu halten.

4. Ventil nach Anspruch 3, **dadurch gekennzeichnet, dass** die vordere Spule (32) dahingehend elektrisch gespeist wird, die Nadel (46) aus ihrer vorgerückten Zwischenstellung in ihre Schließstellung zu bringen, in der sie durch den vorderen Magneten (30) gehalten wird.

5. Ventil nach einem der vorhergehenden Ansprüche, **dadurch gekennzeichnet, dass** das Ventil (10) so ausgerichtet ist, dass sich die Nadel (46) vertikal nach oben in ihre Schließstellung bewegt.

6. Ventil nach Anspruch 1, **dadurch gekennzeichnet, dass** die vordere Spule (32) dahingehend elektrisch gespeist wird, die Nadel (46) in die vorgerückte Zwischenstellung zu bringen und dort zu halten, und dass die hintere Spule (36) dahingehend gespeist wird, die Nadel (46) in die zurückgezogene Stellung zu bringen.

7. Ventil nach Anspruch 6, **dadurch gekennzeichnet, dass** es eine Zwischenspule (34) aufweist, die zwischen der vorderen Spule (32) und der hinteren Spule (36) angeordnet ist und dahingehend gespeist wird, die Nadel (46) in ihre vorgerückte Zwischenstellung zu bringen und dort zu halten und die Nadel (46) in die zurückgezogene Stellung zu bringen.

8. Ventil nach Anspruch 6 oder 7, **dadurch gekennzeichnet, dass** die hintere Spule (36) und der hintere Magnet (38) axial auf gleicher Höhe konzentrisch angeordnet sind.

9. Ventil nach Anspruch 8, **dadurch gekennzeichnet, dass** die hintere Spule (36) radial im Inneren des hinteren Magneten (38) angeordnet ist.

10. Ventil nach einem der Ansprüche 7 bis 9, **dadurch gekennzeichnet, dass** die axiale Länge des Kerns (54) im Wesentlichen gleich der der einerseits durch die vordere Spule (32) und die Zwischenspule (34) und andererseits durch die Zwischenspule (34) und die hintere Spule (36) gebildeten Einheiten ist.

11. Ventil nach einem der Ansprüche 6 bis 10, **dadurch gekennzeichnet, dass** das Ventil (10) so ausgerichtet ist, dass die Nadel (46) vertikal nach unten in ihre Schließstellung bewegt wird.

12. Ventil nach einem der vorhergehenden Ansprüche, **dadurch gekennzeichnet, dass** die Nadel (46) einen Hauptkörper (48, 50, 52) aus unmagnetischem Material aufweist, der den magnetischen Kern (54) trägt.

13. Ventil nach einem der vorhergehenden Ansprüche, **dadurch gekennzeichnet, dass** das Fluid von hinten nach vorne im Ventil zirkuliert.

14. Ventil nach einem der vorhergehenden Ansprüche, **dadurch gekennzeichnet, dass** mindestens einer der beiden Magneten (30, 38) eine Radialmagnetisierung aufweist.

15. Maschine zum Füllen von Behältern, **dadurch gekennzeichnet, dass** sie mindestens ein Ventil nach einem der vorhergehenden Ansprüche aufweist.

## Claims

1. Sterilizable valve for controlling the flow of a fluid in a circuit, of the type in which the valve has a needle (46) which can move axially in a control chamber (16) between a retreated open end position and an advanced closed end position, of the type in which a front end of the chamber forms a seat (20) against which the needle (46, 58) rests when it is in the closed position, and of the type in which the axial position of the needle (46) is determined by a magnetic field created by magnetic field-generating means arranged outside the chamber (16), **characterized in that** the needle (46) has a core (54) made of magnetic material, **in that** the valve has a front permanent magnet (30) creating a front magnetic field which is able to act on the core (54) in such a way as to maintain the needle (46) in the closed position resting on the seat (20), and a rear permanent magnet (38) creating a rear magnetic field which is able to act on the core (54) in such a way as to maintain the needle in the retreated open end position corresponding to a first flow across the valve, **in that** the valve has at least one front coil (32) and one rear coil (36) which are arranged coaxially around the chamber (16) and which are offset axially with respect to one another, **in that** the front coil (32) is arranged to the rear of the front magnet (30), **in that** one of the coils is intended to be able to maintain the needle (46) in an advanced intermediate position corresponding to a second flow, and **in that** the electrical energization of the coils can be controlled so as to cause the needle to move between the end positions and the intermediate position.

2. Valve according to Claim 1, **characterized in that** the rear coil (36) is energized electrically in a first direction in order to drive the needle (46) from its closed position towards its retreated open position.

3. Valve according to Claim 2, **characterized in that** the rear coil (36) is energized electrically in a second direction in order to drive the needle (46) from its retreated open position towards its advanced intermediate position and in order to maintain it in this advanced intermediate position.

4. Valve according to Claim 3, **characterized in that** the front coil (32) is energized electrically in order to bring the needle (46) from its advanced intermediate position towards its closed position in which it is maintained by the front magnet (30).

5. Valve according to any one of the preceding claims, **characterized in that** the valve (10) is oriented in such a way that the needle (46) moves vertically upwards towards its closed position.

6. Valve according to Claim 1, **characterized in that** the front coil (32) is energized electrically in order to drive the needle (46) into the advanced intermediate position and maintain it, and **in that** the rear coil (36) is energized in order to drive the needle (46) into the retreated position.

7. Valve according to Claim 6, **characterized in that** it has an intermediate coil (34) which is arranged between the front (32) and rear (36) coils and which is energized in order to drive the needle (46) into its advanced intermediate position and maintain it and in order to drive the needle (46) into the retreated position.

8. Valve according to either of Claims 6 and 7, **characterized in that** the rear coil (36) and the rear magnet (38) are arranged axially at the same level in a concentric manner.

9. Valve according to Claim 8, **characterized in that** the rear coil (36) is arranged radially within the rear magnet (38).

10. Valve according to any one of Claims 7 to 9, **characterized in that** the axial length of the core (54) is substantially equal to that of the assemblies formed on the one hand by the front coil (32) and the intermediate coil (34) and on the other hand by the intermediate coil (34) and the rear coil (36).

11. Valve according to any one of Claims 6 to 10, **characterized in that** the valve (10) is oriented in such a way that the needle (46) moves vertically downwards towards its closed position.

12. Valve according to any one of the preceding claims, **characterized in that** the needle (46) has a main body (48, 50, 52) made of non-magnetic material which bears the magnetic core (54).

13. Valve according to any one of the preceding claims, **characterized in that** the fluid circulates from rear to front in the valve.

14. Valve according to any one of the preceding claims, **characterized in that** at least one of the two magnets (30, 38) is provided with radial magnetization.

15. Machine for filling containers, **characterized in that** it has at least one valve according to any one of the preceding claims.
